# FASCICULE DE BREVET EUROPEEN

(11) **EP 1 948 465 B1**
(45) Date de publication et mention de la délivrance du brevet: **08.09.2010**
(21) Numéro de dépôt: 06831339.4
(22) Date de dépôt: 15.11.2006
(51) Int. Cl.: B60K 35/00, G02B 27/01

(54) **DISPOSITIF D'AFFICHAGE ESCAMOTABLE POUR UN VEHICULE AUTOMOBILE ET VEHICULE COMPORTANT UN TEL DISPOSITIF**
EINZIEHBARE ANZEIGEVORRICHTUNG FÜR EIN KRAFTFAHRZEUG UND DAMIT AUSGERÜSTETES KRAFTFAHRZEUG
RETRACTABLE DISPLAY DEVICE FOR A MOTOR VEHICLE AND A VEHICLE PROVIDED THEREWITH

(30) Priorité: 18.11.2005 FR 0511716
(43) Date de publication de la demande: 30.07.2008
(73) Titulaire: Peugeot Citroën Automobiles, 78140 Vélizy-Villacoublay (FR)
(72) Inventeur: LEBRETON, Etienne, F-92170 Vanves (FR)
(86) Numéro de dépôt international: PCT/FR2006/051177
(87) Numéro de publication internationale: WO 2007/057608

(56) Documents cités:
- US-A- 4 664 475
- US-A- 5 394 203
- US-A- 5 457 575
- US-A1- 2002 167 189
- US-A1- 2003 223 133

## Description

La présente invention concerne un dispositif d'affichage escamotable pour un véhicule automobile, ainsi qu'un véhicule automobile comportant un tel dispositif. Un tel dispositif est proposé dans le document US 2002/0 167 189 A1.

Dans le cadre de l'amélioration de la sécurité routière, les constructeurs d'automobiles utilisent depuis quelques années des dispositifs d'affichage conçus selon le principe de la vision à tête haute utilisée depuis déjà un certain temps dans l'aviation.

Les dispositifs d'affichage à vision à tête haute permettent de projeter une information dans le champ de vision de l'espace devant le véhicule automobile afin que le conducteur du véhicule automobile puisse lire cette information sans quitter des yeux l'espace devant le véhicule automobile. En même temps, l'information peut être lue sans modification de l'accommodation des yeux du conducteur du véhicule.

Pour obtenir la projection de l'information dans le champ de vision de l'espace devant le véhicule automobile, certains dispositifs d'affichage utilisent le pare-brise. Un tel dispositif semble a priori avantageux, notamment en ce qui concerne le nombre de composantes nécessaires. Toutefois, l'inclinaison du pare-brise ou de toute autre vitre dans un véhicule automobile répond à des critères aérodynamiques ou de stabilité/résistance mécanique du véhicule automobile et ne présente ainsi pas systématiquement un angle d'inclinaison avantageux pour le positionnement de l'affichage dans le champ de vision du conducteur du véhicule automobile. Pour cette raison, certains véhicules automobiles ont été équipés de dispositifs à vision à tête haute comportant une lame réfléchissante indépendante.

Toutefois, en raison des courtes distances entre le conducteur du véhicule automobile et la lame, des différences de taille d'un conducteur à l'autre d'un véhicule automobile font que les images virtuelles produites par le dispositif d'affichage à vision à tête haute ne sont pas lisibles par tous les conducteurs avec la même facilité, voire même pas lisible du tout par certains conducteurs.

Notons à cet endroit que la présente invention concerne principalement un dispositif pour afficher des informations destinées au conducteur du véhicule automobile. Toutefois, le dispositif de l'invention peut également être conformé de manière que tout autre utilisateur du véhicule automobile accompagnant le conducteur du véhicule automobile puisse lire ces informations sous les mêmes conditions que celles valables pour le conducteur. De même, un dispositif individuel répondant aux mêmes critères peut être mis à la disposition de l'utilisateur accompagnant le conducteur du véhicule automobile pour faire apparaître soit les mêmes informations que pour le conducteur, soit des informations spécifiques. Aussi, pour simplifier le langage de la suite de la description de la présente invention, référence sera faite uniquement au conducteur du véhicule automobile.

Par ailleurs, des indications d'agencement telles que "devant", "derrière", "en haut", "en bas" et autres font référence à des positions telles qu'elles se présentent au conducteur du véhicule automobile.

Indépendamment des difficultés de lecture que présentent les dispositifs d'affichage à position de lame fixe, il s'est avéré souhaitable de pouvoir protéger les éléments optiques du dispositif par exemple contre la poussière et d'autres effets nuisibles risquant de détériorer la qualité de la lame.

Une première solution consiste à monter la lame réfléchissante de manière basculante, à la façon d'un couvercle que l'on rabat lorsque l'on n'a pas besoin du dispositif. Une telle solution est proposée dans le document US-B-5 394 203.

Dans un dispositif d'affichage de ce type, la lame basculante est maintenue dans une position déployée, c'est-à-dire dans une position approximativement verticale, pendant toute la durée de l'utilisation du dispositif d'affichage, qui correspond en général à la durée d'utilisation du véhicule automobile. Lorsque le dispositif d'affichage n'est plus utilisé, la lame est escamotée en la faisant pivoter autour d'un axe horizontal pour la rendre dans une position essentiellement horizontale ou couchée, la position de repos.

Cependant, le seul basculement de la lame ne suffit pas pour protéger la lame entièrement et ne protège pas non plus les charnières ou tout autre mécanisme de pivotement de la lame.

Le but de l'invention est de remédier aux inconvénients énoncés ci avant.

En même temps, il serait souhaitable que la position déployée de la lame, et plus particulièrement l'angle d'inclinaison de la lame en position déployée, puisse être réglée selon les besoins du conducteur du véhicule automobile.

Le but de l'invention est atteint avec un dispositif d'affichage pour un véhicule automobile, comprenant une source lumineuse destinée à engendrer une information à afficher et une lame escamotable réfléchissant l'information vers un utilisateur du véhicule.

Selon l'invention, la lame est montée sur un support mobile susceptible d'être déplacé entre une position de repos et au moins une position d'affichage, de façon que la lame soit escamotée lorsque le support mobile est dans la position de repos et que la lame soit déployée lorsque le support mobile est dans une position d'affichage.

Grâce aux dispositions de l'invention, il est possible de réaliser un dispositif d'affichage escamotable n'ayant pas besoin d'un grand volume d'insertion dans la planche de bord d'un véhicule automobile et qui, surtout, n'a pas de couvercle de protection de grande envergure nécessitant un angle de pivotement vers l'avant assez important pour ne pas obturer le chemin optique à l'image réelle traversant la lame escamotable vers le conducteur du véhicule.

La présente invention concerne également les caractéristiques ci-après considérées isolément ou selon toute combinaison techniquement possible :
le support mobile est monté sur des rails ;
le support mobile est monté sur des rails conformés pour basculer le support mobile entre une première position dite couchée dans laquelle il se trouve lorsqu'il est en position de repos et une seconde position dite debout dans laquelle il se trouve lorsqu'il est en une position d'affichage ;
la lame est montée fixe sur le support mobile ;
le support mobile et les rails sont disposés dans un boîtier destiné à enfermer le support mobile et la lame entièrement lorsque la lame est escamotée ;
le boîtier comprend un clapet destiné à renfermer le boîtier lorsque la lame est escamotée ;
la source lumineuse est logée dans le boîtier ;
le boîtier comprend une trappe renfermant le boîtier lorsque la lame est escamotée et ouvrant le boîtier suffisamment lorsque la lame est déployée pour qu'un faisceau lumineux émis par la source lumineuse puisse parvenir à la lame ;
le dispositif comprend un moyen motorisée permettant de déplacer le support mobile entre la position de repos et au moins une position d'affichage ;
le moyen motorisé est conformé pour pouvoir régler la position d'affichage du support mobile, et par cela la position déployée de la lame, de manière à adapter la hauteur à laquelle l'information apparaît à la taille de l'utilisateur du véhicule automobile.

Le but de la présente invention est également atteint avec un véhicule automobile comprenant un dispositif d'affichage escamotable ayant les caractéristiques énoncées plus haut.

D'autres caractéristiques et avantages de la présente invention ressortiront de la description ci-après d'un mode de réalisation de l'invention. La description est faite en référence aux dessins annexés dans lesquels
la figure 1 montre le dispositif d'affichage de l'invention, en état rangé, en une vue latérale simplifiée,
la figure 2 montre le dispositif d'affichage de l'invention, en état déployé, en une vue latérale simplifiée,
la figure 3 montre l'agencement du dispositif d'affichage de l'invention dans la partie avant d'un véhicule automobile,
la figure 4 montre le dispositif d'affichage de l'invention, en une vue latérale simplifiée, simultanément en position rangée et en une position déployée,
la figure 5 montre le dispositif d'affichage de l'invention en perspective,
la figure 6 montre le dispositif d'affichage de l'invention en une vue de dessus et
la figure 7 montre la variation de la position déployée du dispositif d'affichage de l'invention en une vue latérale simplifiée.

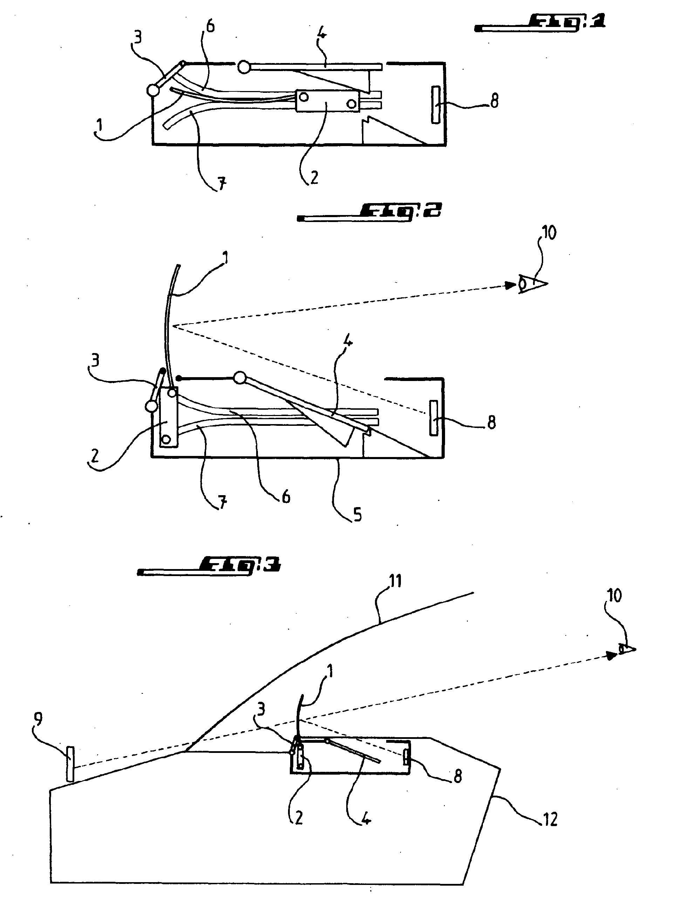

Le dispositif d'affichage escamotable de l'invention est représenté sur la figure 1 en état rangé. Le dispositif comprend une source lumineuse 8 destinée à engendrer une information à afficher et une lame escamotable1 réfléchissant l'information vers un utilisateur 10, par exemple le conducteur, du véhicule. La lame 1 est montée sur un support mobile 2 qui peut être déplacé entre une position de repos proche de la source lumineuse 8 et au moins une position d'affichage éloignée de la source lumineuse 8. La position de repos et la ou les position d'affichage sont déterminées de façon que la lame 1 soit escamotée, de préférence couchée, lorsque le support mobile 2 est dans la position de repos et que la lame 1 soit déployée, de préférence debout, lorsque le support mobile 2 est dans une position d'affichage.

Afin d'obtenir à la fois un déplacement du support mobile 2 entre la position de repos et au moins une position d'affichage, dans un sens comme dans l'autre, et un redressement de la lame 1 escamotée vers une position déployée et inversement un couchage de la lame 1 lors d'un déplacement du support mobile 2 à partir de la position d'affichage vers la position de repos, le support mobile 2 est monté sur des rails 6, 7 qui le guident aussi bien en translation qu'en basculement.

Pour obtenir le mouvement d'escamotage et le mouvement de déploiement de la lame 1 par la seule commande du mouvement du support mobile 2, la lame 1 est montée fixe sur le support mobile 2.

Conformément aux dispositions de l'invention, en position déployée de la lame indépendante 1, la fin de la course de mouvement du support mobile 2 peut être ajustée ou réglée par exemple au moyen d'un moteur pas à pas ou d'une vis sans fin pour obtenir un réglage de l'angle d'inclinaison de la lame 1, et ainsi un réglage de l'angle d'orientation de l'image virtuelle 9.

La figure 2 montre le dispositif d'affichage de l'invention en position d'affichage. Cette figure montre plus particulièrement que, lorsque la lame 1 totalement ou au moins partiellement transparente est en position debout, l'espace devant le véhicule automobile est visible à travers la lame 1. La lame 1 est courbée, de préférence sphériquement, de façon à agrandir et éloigner l'image virtuelle 9 qui résulte de la réflexion de l'image originelle émise par la source lumineuse 8.

Le dispositif d'affichage de l'invention comprend par ailleurs un boîtier 5 avec un clapet 3 destiné à renfermer le boîtier 5 lorsque la lame 1 est escamotée. Le clapet 3 s'ouvre vers l'extérieur du boîtier 5 pour libérer le chemin à la lame 1 lorsque celle-ci doit sortir du boîtier 5 et se ferme lorsque la lame est retournée dans le boîtier 5. A cet effet, le clapet 3 peut être relié à un mécanisme moyennant lequel le clapet 3 est poussé en ouverture et éventuellement aussi remmené en fermeture. Toutefois, la fermeture du clapet 3 peut aussi être obtenu moyennant un ressort, par exemple un ressort à torsion, qui maintient le clapet ensuite fermé. Le clapet 3 peut tout aussi bien être actionné en ouverture et en fermeture par un moteur électrique. Le clapet 3 peut également être ouvert par la poussée exercée par la lame 1 lorsque celle-ci sort du boîtier 5 et être refermé par un ressort lorsque la lame est retournée dans le boîtier 5.

Le boîtier 5 comprend également une trappe 4 renfermant le boîtier 5 lorsque la lame 1 est escamotée et ouvrant le boîtier 5 par un pivotement vers l'intérieur du boîtier 5 lorsque la lame 1 est déployée afin qu'un faisceau lumineux émis par la source lumineuse 8 puisse parvenir à la lame 1. L'ouverture et la fermeture de la trappe 4 peuvent être obtenues à l'aide de moyens motorisés commandés ou par une coopération entre la trappe 4 et des moyens conformés pour pouvoir déplacer le support mobile 2 entre la position de repos et une position d'affichage.

Pour ne pas surcharger la figure 2, celle-ci montre uniquement le faisceau lumineux émis par la source lumineuse 8 et réfléchie par la lame 1 vers le conducteur du véhicule automobile, représenté par ses yeux 10.

La figure 3 représente le dispositif d'affichage de l'invention en état déployé dans un entourage d'application, à savoir un véhicule automobile évoqué par un pare-brise 11 et une planche de bord 12. Conformément au principe de fonctionnement des dispositifs d'affichage à vision tête haute, une information engendrée par la source lumineuse 8 est envoyée vers la lame déployée 1 qui la fait apparaître sous la forme d'une image virtuelle 9 en superposition avec l'image réelle de l'espace devant le véhicule automobile aperçu par le conducteur 10 à travers le pare-brise 11.

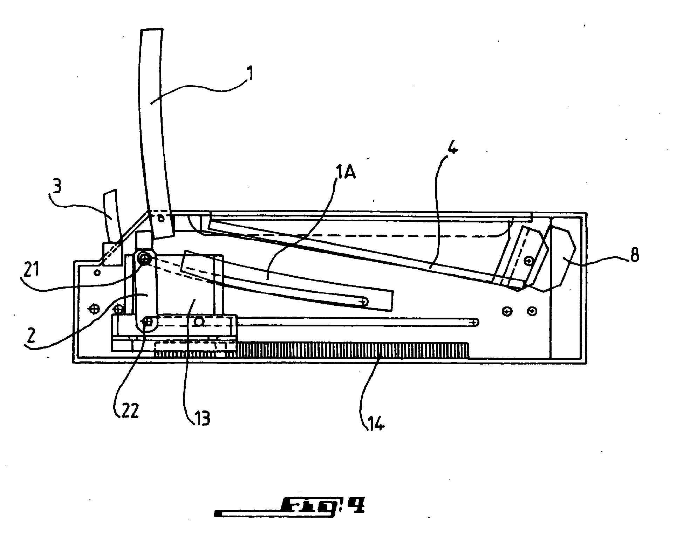

La figure 4 montre le dispositif d'affichage de l'invention en une vue latérale schématisée avec la lame à la fois en position déployée, référencée 1, et en position couchée, référencée 1A, mais avec le support mobile 2 uniquement en position d'affichage. Le clapet 3 et la trappe 4 sont ouverts.

La figure 4 montre également que le support 2 est relié à un élément motorisé 13 coopérant avec une crémaillère 14 pour réaliser le déplacement du support 2, dans un sens comme dans l'autre, entre la position de repos et une position d'affichage. Afin de pouvoir obtenir un déplacement finement réglable en fin de course vers une position d'affichage, il y a au moins deux solutions possibles. La première consiste en l'utilisation d'une crémaillère ayant un pas assez fin pour atteindre le but recherché d'un réglage fin de la position d'affichage et donc de l'inclinaison de la lame 1. Selon une solution alternative, le crémaillère 14 présente une forme rectiligne sur la plus grande partie de sa longueur et est déviée à la fin de la course pour décomposer le mouvement de déplacement en une composante longitudinale suivant l'étendue rectiligne de la crémaillère et une composante transversale. L'avancement effectif du support mobile 2 en fin de course dépend dans ce cas du rapport entre la composante longitudinale et la composante transversale. La crémaillère peut être réalisée à cet effet avec deux sections droites enfermant un angle entre elles ou avec une partie rectiligne suivie à la fin d'une partie courbe. Cette solution alternative suppose bien évidemment une liberté de mouvement transversale de l'élément motorisé 13 par rapport à la direction d'avancement.

Une seconde solution consiste à intégrer à l'élément motorisé 13 un élément secondaire motorisé comportant par exemple une vis sans fin. Selon cette solution, l'élément motorisé 13 déplace le support mobile 2 de la position de repos vers une position d'affichage de base et l'élément secondaire effectue ensuite le déplacement fin du support mobile 2.

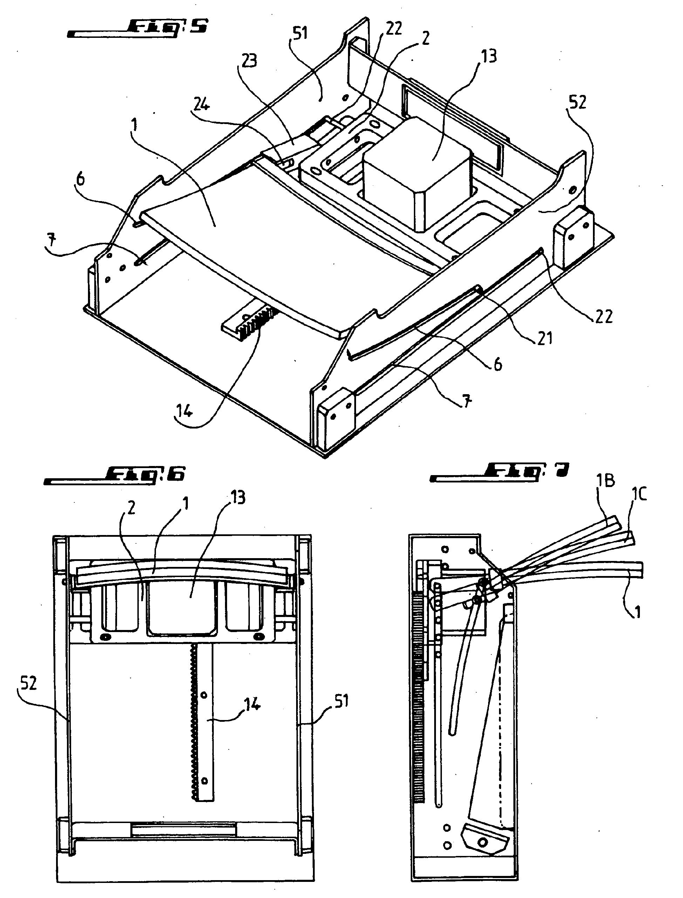

La figure 5 montre le dispositif d'affichage de l'invention en une vue en perspective. Cette représentation permet d'observer que les rails 6, 7 sont avantageusement réalisés sous la forme de fentes pratiquées dans des parois de support latérales 51, 52 du boîtier 5 et que la lame 1 est fixée sur le support mobile 2 par emboîtement dans de encoches 24 pratiquées dans des bras 23 du support mobile 2.

En effet, pendant son déplacement le support mobile 2 est guidé à l'aide d'axes 21, 22 engagés dans les rails 6, 7. La disposition et la forme des rails sont déterminées de façon que le support mobile 2 est respectivement couché ou redressé, selon le sens du mouvement du support 2, au fur et à mesure de son avancement. Pour obtenir ce résultat, le rail inférieur 7 est rectiligne et disposé essentiellement horizontalement, alors que le rail supérieur 6 est légèrement courbé et disposé en biais, notamment en s'éloignant du rail 7 au fur et à mesure de son approche à la position d'affichage de base du support mobile 2. De plus, le support mobile 2 est guidé à sa partie supérieure par l'axe 21 engagé dans le rail 6 et à sa partie inférieure par l'axe 52 engagé dans le rail 7.

La figure 5 montre par ailleurs que, selon une variante de réalisation, le bord inférieur de la lame 1 n'est pas emboîté en permanence dans les bras 23, mais qu'il est dégagé des encoches 24 lorsque le support 2 est dans la position de repos. Cette disposition permet essentiellement d'éviter qu'une quelconque contrainte puisse être exercée par le support 2 sur la lame 1 le temps que celle-ci est couchée. Lorsque le support mobile 2 est déplacé vers une position d'affichage, la lame s'engage à nouveau dans les encoches 24, et cela au plus tard lorsque la lame 1 est suffisamment redressée pour que le poids de la lame produise son effet.

La figure 6 montre le dispositif d'affichage de l'invention en une vue de dessus, montrant plus particulièrement la disposition de la lame 1 et du support 2 ainsi que de l'élément motorisé 13 et de la crémaillère 14 entre les parois de support latérales 51, 52 du boîtier 5.

La figure 7 montre le dispositif d'affichage de l'invention en une vue latérale avec la lame 1 en trois inclinaisons différentes correspondant à des positions de fin de course lors du déplacement du support 2 vers une position d'affichage. Les références 1B et 1C désignent respectivement une avant-dernière position et une dernière position de la lame avant sa position finale référencée par 1.

La figure 7 montre également la position finale et une dernière position avant la position finale du support 2.

## Revendications

1. Dispositif d'affichage pour un véhicule automobile, comprenant une source lumineuse (8) destinée à engendrer une information à afficher et une lame (1) escamotable au moins partiellement transparente réfléchissant l'information vers un utilisateur du véhicule la lame (1) étant montée fixe sur un support mobile (2) susceptible d'être déplacé entre une position de repos et au moins une position d'affichage, de façon que la lame (1) soit escamotée lorsque le support mobile (2) est dans la position de repos et que la lame (1) soit déployée lorsque le support mobile (2) est dans une position d'affichage **caractérisé en ce que** le support mobile (2) est monté **d'une part dans le prolongement de la lame et d'autre part** sur des rails (6, 7) conformés **pour guider en translation et** pour basculer le support mobile (2) entre une première position dite couchée dans laquelle il se trouve lorsqu'il est en position de repos et une seconde position dite debout dans laquelle il se trouve lorsqu'il est en une position d'affichage.

2. Dispositif selon la revendication 1, **caractérisé en ce que** le support mobile (2) et les rails (6, 7) sont disposés dans un boîtier (5) destiné à enfermer le support mobile (2) et la lame (1) entièrement lorsque la lame (1) est escamotée.

3. Dispositif selon la revendication 2, **caractérisé en ce que** le boîtier (5) comprend un clapet (3) destiné à renfermer le boîtier (5) lorsque la lame (1) est escamotée.

4. Dispositif selon la revendication 2 ou 3, **caractérisé en ce que** la source lumineuse (8) est logée dans le boîtier (5) et **en ce que** le boîtier (5) comprend une trappe (4) renfermant le boîtier (5) lorsque la lame (1) est escamotée et ouvrant le boîtier (5) suffisamment lorsque la lame (1) est déployée pour qu'un faisceau lumineux émis par la source lumineuse (8) puisse parvenir à la lame (1).

5. Dispositif selon l'une quelconque des revendications précédentes, **caractérisé en ce qu'**il comprend un moyen motorisée permettant de déplacer le support mobile (5) entre la position de repos et au moins une position d'affichage.

6. Dispositif selon la revendication 5, **caractérisé en ce que** le moyen motorisé est conformé pour pouvoir régler la position d'affichage du support mobile (2), et par cela la position déployée de la lame (1), de manière à adapter la hauteur à laquelle l'information apparaît à la taille de l'utilisateur du véhicule automobile.

7. Véhicule automobile, **caractérisé en ce qu'**il comprend un dispositif selon l'une quelconque des revendications précédentes.

## Claims

1. Display device for a motor vehicle, comprising a light source (8) intended to generate information that is to be displayed, and an at least partially transparent retractable plate that reflects the information towards the user of the vehicle, the plate (1) being fixedly mounted on a mobile support (2) that can be moved between a rest position and at least one display position, so that the plate (1) is retracted when the mobile support (2) is in the rest position and the plate (1) is deployed when the mobile support (2) is in a display position, **characterized in that** the mobile support (2) is mounted on the one hand in the continuation of the plate and, on the other hand, on rails (6, 7) shaped to guide the translational movement of and to pivot the mobile support (2) between a first position known as the couched position in which it lies when it is in the rest position and a second position known as the upright position in which it is in the display position.

2. Device according to Claim 1, **characterized in that** the mobile support (2) and the rails (6, 7) are arranged in a casing (5) intended to enclose the mobile support (2) and the plate (1) fully when the plate (1) is retracted.

3. Device according to Claim 2, **characterized in that** the casing (5) comprises a shutter (3) intended to close the casing (5) when the plate (1) is retracted.

4. Device according to Claim 2 or 3, **characterized in that** the light source (8) is housed in the casing (5) and **in that** the casing (5) comprises a hatch (4) that closes the casing (5) when the blade (1) is retracted and that opens the casing (5) sufficiently when the plate (1) is deployed that a beam of light emitted by the light source (8) can reach the plate (1).

5. Device according to any one of the preceding claims, **characterized in that** it comprises a motorized means allowing the mobile support (5) to be moved between the rest position and at least one display position.

6. Device according to Claim 5, **characterized in that** the motorized means is designed to be able to adjust the display position of the mobile support (2), and thereby the deployed position of the plate (1), so as to adapt the height at which the information appears to suit the size of the user of the motor vehicle.

7. Motor vehicle, **characterized in that** it comprises a device according to any one of the preceding claims.

## Patentansprüche

1. Anzeigevorrichtung für ein Kraftfahrzeug, die eine Lichtquelle (3), die dazu bestimmt ist, eine anzuzeigende Information zu erzeugen, und eine einziehbare, zumindest teilweise transparente Lamelle (1) enthält, die die Information zu einem Benutzer des Fahrzeugs reflektiert, wobei die Lamelle (1) ortsfest auf einen beweglichen Träger (2) montiert ist, der zwischen einer Ruhestellung und mindestens einer Anzeigestellung verschoben werden kann, damit die Lamelle (1) eingezogen ist, wenn der bewegliche Träger (2) in der Ruhestellung ist, und die Lamelle (1) ausgezogen ist, wenn der bewegliche Träger (2) in einer Anzeigestellung ist, **dadurch gekennzeichnet, dass** der bewegliche Träger (2) einerseits in der Verlängerung der Lamelle und andererseits auf Schienen (6, 7) montiert ist, die ausgebildet sind, um den beweglichen Träger (2) in Translationsrichtung zu führen und zwischen einer ersten, so genannten liegenden Stellung, in der er sich befindet, wenn er in der Ruhestellung ist, und einer so genannten aufrechten Stellung zu schwenken, in der er sich befindet, wenn er in der Anzeigestellung ist.

2. Vorrichtung nach Anspruch 1, **dadurch gekennzeichnet, dass** der bewegliche Träger (2) und die Schienen (6, 7) in einem Gehäuse (5) angeordnet sind, das dazu bestimmt ist, den beweglichen Träger (2) und die Lamelle (1) ganz zu umschließen, wenn die Lamelle (1) eingezogen ist.

3. Vorrichtung nach Anspruch 2, **dadurch gekennzeichnet, dass** das Gehäuse (5) einen Klappverschluss (3) enthält, der dazu bestimmt ist, das Gehäuse (5) zu verschließen, wenn die Lamelle (1) eingezogen ist.

4. Vorrichtung nach Anspruch 2 oder 3, **dadurch gekennzeichnet, dass** die Lichtquelle (8) im Gehäuse (5) angeordnet ist, und dass das Gehäuse (5) eine Klappe (4) enthält, die das Gehäuse (5) verschließt, wenn die Lamelle (1) eingezogen ist, und das Gehäuse (5) ausreichend öffnet, wenn die Lamelle (1) ausgezogen ist, damit ein von der Lichtquelle (8) gesendeter Lichtstrahl die Lamelle (1) erreichen kann.

5. Vorrichtung nach einem der vorhergehenden Ansprüche, **dadurch gekennzeichnet, dass** sie eine motorisierte Einrichtung enthält, die es ermöglicht, den beweglichen Träger (5) zwischen der Ruhestellung und mindestens einer Anzeigestellung zu verschieben.

6. Vorrichtung nach Anspruch 5, **dadurch gekennzeichnet, dass** die motorisierte Einrichtung so ausgebildet ist, dass sie die Anzeigestellung des beweglichen Trägers (2) und **dadurch** die ausgezogene Stellung der Lamelle (1) einstellen kann, um die Höhe, in der die Information sichtbar wird, an die Größe des Benutzers des Kraftfahrzeugs anzupassen.

7. Kraftfahrzeug, **dadurch gekennzeichnet, dass** es eine Vorrichtung nach einem der vorhergehenden Ansprüche enthält.
